# EUROPEAN PATENT APPLICATION

(11) **EP 1 253 452 A2**
(43) Date of publication of application: **30.10.2002**
(21) Application number: 02009491.8
(22) Date of filing: 25.04.2002
(51) Int. Cl.: G02B 6/40, G02B 6/43

(54) **Optical fiber array**

(30) Priority: 27.04.2001 US 843979
(71) Applicant: FITEL USA CORPORATION (a Delaware Corporation), Norcross, Georgia 30071 (US)
(72) Inventor: Bauer, Arthur D., Southington, Connecticut 06489 (US); Dimascio, Philip A., New Milford, Connecticut 06776 (US); Kearns, Robin M., Avon, Connecticut 06001 (US); Warych, Edward T., 18, Bristol, Connecticut 06010 (US)
(74) Representative: Schoppe, Fritz, Dipl.-Ing.

(57) **Abstract**

An optical fiber array (100) in accordance with the principles of the present invention includes a faceplate (102) having a plurality of precisely positioned holes (104) extending from front to back surfaces completely through the faceplate (102). Each hole has an optical fiber (106) inserted therethrough and each fiber (106) includes core, cladding, and coating layers. An end-portion of each of the fibers (106) is stripped of the coating layer, exposing the fibers' cladding layer. The minimum inside diameter (D) of each faceplate hole (104) is greater than the greatest outside diameter of the fibers' cladding layer, permitting each fiber cladding layer to be inserted completely through any of the holes (104). Optical fibers (106) are inserted into one (rear) faceplate surface and through the holes (104) with a sufficient segment of the stripped fiber end-portion extending beyond the opposite (front) faceplate surface to ensure that, when processing is complete, a complete cross-section of the core layer is exposed at the front face of the faceplate (102). Once inserted, the fibers (106) are secured in position and the portion of fiber (106) extending beyond the faceplate fronts surface is removed, leaving the fiber endfaces substantially coplanar with the front surface of the faceplate (102).

## Description

### FIELD OF THE INVENTION

The invention relates to fiber optic arrays and, in particular, to high precision fiber optic arrays and methods of making the same.

### BACKGROUND OF THE INVENTION

Noise immunity and extremely high bandwidth capacity are only a few of the myriad advantages optical signal transmission enjoys over electronic transmission, particularly within waveguides, such as optical fibers and integrated optics waveguides. Consequently, optical components are rapidly displacing their electronic counterparts in communications and other systems. Yet, in spite of the many advantages accruing to optical operation, many electronic communications components have yet to be replaced by the corresponding optical components. Optical cross-connects, for example, require precise placement of optical fiber endfaces in order to couple light from light-switching devices such as a microelectromechanical mirror array into receiving fibers. Two dimensional fiber optic arrays for optical crossbar switches are discussed, for example, in "High-Speed Optoelectronic VLSI Switching Chip with > 4000 Optical I/O Based on Flip Chip Bonding of MQW Modulators and Detectors to Silicon CMOS," Anthony L. Lentine, et. al., IEEE Journal of Selected Topics in Quantum Electronics Vol. 2, No. 1, pp. 77 April 1996, and "Fabrication of Two Dimensional Fiber Optic Arrays for an Optical Crossbar Switch," Geoff M. Proudly, Henry White, Optical Engineering, February 1994, Vol.33 No. 2, pp.627-635., and U.S. Patent No. 5,907,650 issued May 25, 1999 to Sherman et al, all of which are hereby incorporated by reference.

Notwithstanding the processes described in the above-referenced publications, a need exists for readily manufacturable, high precision fiber arrays.

### SUMMARY

An optical fiber array in accordance with the principles of the present invention includes a faceplate having a plurality of precisely positioned holes extending from front to back surfaces completely through the faceplate. Each hole has an optical fiber inserted therethrough and each fiber includes core, cladding, and coating layers. An end-portion of each of the fibers is stripped of the coating layer, exposing the fibers' cladding layer. The minimum inside diameter of each faceplate hole is greater than the greatest outside diameter of the fibers' cladding layer, permitting each fiber cladding layer to be inserted completely through any of the holes. Although the optical fibers in widespread use today typically include a glass core, an optical array in accordance with the principles of the present invention may employ other fibers, such as photonic crystal fibers, which feature a hollow core. The use of the term "cladding layer" herein is meant to encompass the bandgap material surrounding the hollow core of photonic crystal fibers.

In an illustrative embodiment, each hole may be formed using electrochemical etching, deep reactive ion etching, laser ablation or any combination of such methods. After forming the faceplate holes and stripping the coating layers from the optical fiber end portions, the optical fibers are inserted into one (rear) faceplate surface and through the holes with a sufficient segment of the stripped fiber end-portion extending beyond the opposite (front) faceplate surface to ensure that, when processing is complete, a complete cross-section of the core layer is exposed at the front side of the faceplate. Once inserted, the fibers are secured in position and the portion of fiber extending beyond the faceplate fronts surface is removed using a laser cutting or mechanical shearing process. This shearing process leaves the fiber endfaces substantially coplanar with the front surface of the faceplate. The fiber endfaces are then polished and an anti-reflective coating is applied.

### BRIEF DESCRIPTION OF THE DRAWINGS

The above and further features, aspects, and advantages of the invention will be apparent to those skilled in the art from the following detailed description, taken together with the accompanying drawings in which:
Figures 1A and 1B are top plan and sectional views of an optical fiber array in accordance with the principles of the present invention;
Figure 2 is a sectional view of an optical fiber such as may be included in an optical fiber array in accordance with the principles of the present invention;
Figures 3A and 3B are sectional views of faceplates, each of which, may be combined with a plurality of optical fibers to form an optical fiber array in accordance with the principles of the present invention;
Figure 4 is a sectional view of a faceplate with inserted optical fiber in accordance with the principles of the present invention;
Figures 5A and 5B are sectional views of faceplates in various stages of manufacture in accordance with the principles of the present invention;
Figure 6 is a sectional view of an optical fiber inserted within a faceplate hole to form one of a plurality of precisely positioned optical fibers in an array of optical fibers in accordance with the principles of the present invention;
Figures 7A, 7B, and 7C are sectional views of a ferrule-housed optical fiber embodiment of an optical fiber array in accordance with the principles of the present invention; and
Figure 8 is a flow chart depicting the process of manufacturing an optical fiber array in accordance with the principles of the present invention.

### DETAILED DESCRIPTION

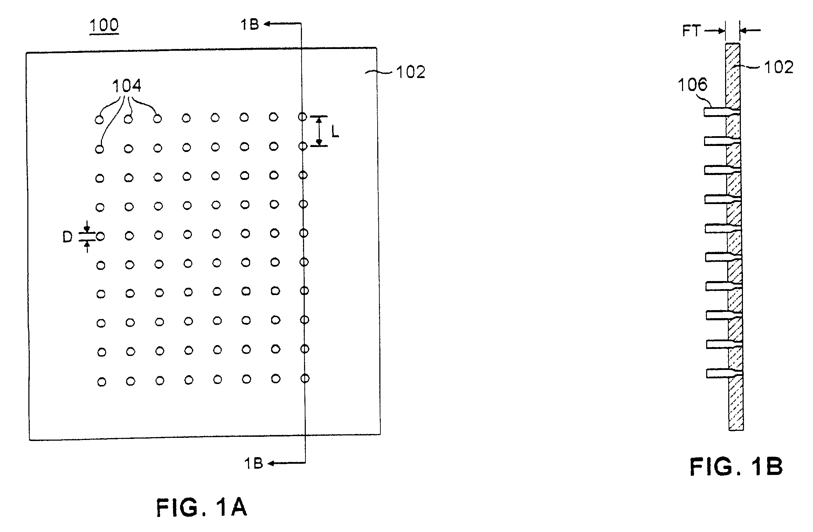

The top plan view of Figure 1A illustrates an optical fiber array 100 in accordance with the principles of the present invention. The array 100 includes a faceplate 102 having a plurality of precisely positioned holes 104 extending through the face plate from front to back surfaces. The array may be organized in a variety of geometrical configurations, for example, as a rectangular array of 4 X 20 fibers or as a square array of 4X4, 9X9, 19X19, 36X36, or 38X38 fibers. By employing integrated circuit manufacturing processes the precision of the center to center spacing, CC, of the holes may be held to ±1 micrometers. As explained in greater detail in the discussion related to the following Figures, the diameter D of the holes 104 is greater than the outside diameter of the cladding layer of the optical fibers inserted through the holes.

As illustrated in greater detail in the sectional view of Figure 1B, each hole 104 has an optical fiber 106 inserted therethrough. The faceplate thickness FT is, illustratively, in the range of 300 - 500 micrometers. The faceplate 102 may be composed of a material such as Silicon which is widely used in, and amenable to the manufacturing techniques of, the integrated circuit industry. In particular, the faceplate may comprise all or part of a cut and polished integrated circuit Silicon "wafer". In addition to ready availability and familiar use in integrated circuit manufacturing, a Silicon wafer provides the additional advantage of a thermal coefficient of expansion that closely matches that of the optical fibers 106. Nevertheless, for cost or other reasons, other materials such as Zirconia, Alumina, Kapton Polyimide or stainless steel, may be used as the faceplate material. In an illustrative embodiment, each hole may be formed using electrochemical etching, deep reactive ion etching, laser cutting or any combination of such methods. For example, the formation of elongated channels is a substrate material, such as Silicon, is known and described, in U.S. Patent No. 5,997,713, for "Silicon Etching Processing for Making Microchannel Plates," issued Dec. 7, 1999 to Beetz, Jr. et al., which is hereby incorporated by reference in its entirety.

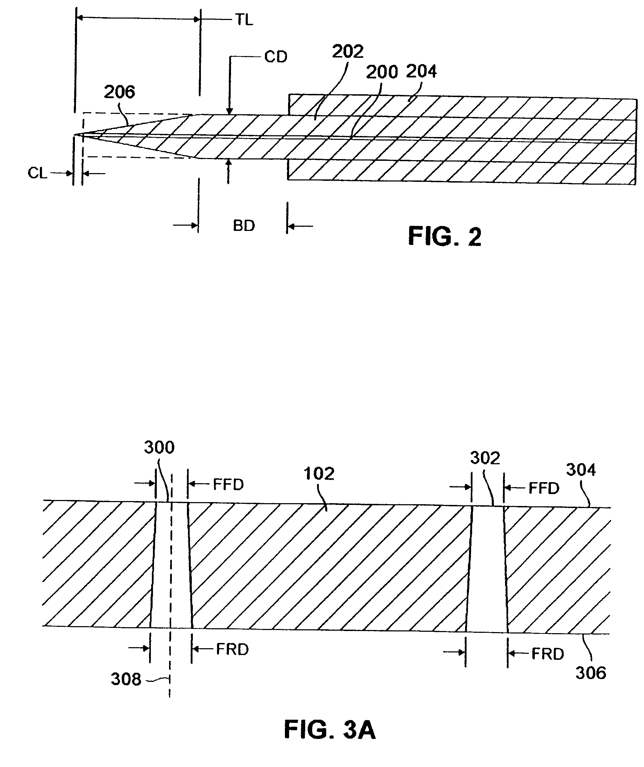

As illustrated in the sectional view of Figure 2, each fiber 106 includes core 200, cladding 202, and coating, or buffer 204, layers. An end-portion of each of the fibers is stripped of the coating layer, exposing a length, TL + BD, of the fibers' cladding layer. A hot sulfuric acid strip can be used to strip most jackets. The minimum inside diameter of each faceplate hole is greater than the greatest outside diameter, CD, of the fibers' cladding layer, permitting each fiber cladding layer to be inserted completely through any of the holes. The outside cladding diameter CD is typically 125 micrometers. Although the fiber 106 may be inserted through a hole 104 after stripping, with the entire length of exposed fiber having a diameter CD, the fiber end may be formed into a tapered point 206 having a length TL in order to ease the insertion of the fiber into a hole 104. Etch procedures for forming a tapered point on an optical fiber are known and described, for example, in U.S. Patent No. 4,469,554 for "Etch Procedure For Optical Fibers," issued September 4, 1984 to Turner, which is hereby incorporated by reference in its entirety. Using this process, the tapered point 206 may be formed and a length CL of fiber core 206 may be exposed. The length TL of tapered fiber may be on the order of ten times the cladding diameter of the fiber, the exposed core length on the order of two to three times the length of the cladding diameter, and the length BD long enough so that the stripped section of the fiber (BD+TL+CL) may be inserted completely through the faceplate and adhesive layers on the front and back surfaces of the faceplate, exposing a full cross-section of the fiber core at the front surface of the faceplate or at the front surface of any adhesive layer that may be applied to the front surface of the faceplate.

In the sectional view of Figure 3A two holes 300 and 302 provide a detailed cross sectional view of holes, such as the holes 104 of Figure 1, formed in the faceplate 102. The faceplate 102 has front 304 and rear 306 surfaces with holes 300 and 302 communicating between the front 304 and rear 306 surfaces. Each hole is formed with a faceplate front diameter FFD and a faceplate rear diameter. Although the diameters FFD and FRD may be equal, in order to ease the insertion of fiber ends, the rear diameters FRD may be made larger than the front FFD diameters. That is, with a larger faceplate rear diameter, a fiber may be inserted into a larger target hole and "funneled" into the precisely positioned, close-fitting front hole. Additionally, epoxy within the hole serves to provide guidance, support, and a "loose hold" for the fiber as it is inserted into the hole. Once cured, epoxy surrounding the fiber within the hole, in addition to epoxy surrounding and adhering to the fiber on the front and rear surfaces of the faceplate, not only fix the fiber in position, but provide strain and bend relief for the inserted fiber.

Both diameters FFD and FRD are larger than the outside cladding diameter CD of the fiber to be inserted in the respective holes, allowing a fiber stripped of its jacket layer to completely pass through the faceplate 102 when inserted therein. As previously mentioned, the outside cladding diameter CD is typically substantially equal to 125 micrometers; the smallest inside diameter, whether FFD, FRD, or a diameter within the hole walls at an intermediate location, is larger than the outside cladding diameter. In an illustrative embodiment, the smallest inside diameter is greater than the cladding diameter approximately 1 micrometer, yielding an inside diameter of 126 micrometers. As will be described in greater detail below, a close fit between the cladding layer and the inside hole diameter, in combination with a layer of epoxy surrounding the cladding layer, lends support to the enclosed fiber, aiding in the precise positioning of the fiber core without impeding the complete insertion of the fiber (that is, insertion of the fiber until a full cross section of the fiber core is exposed to the front side of the faceplate).

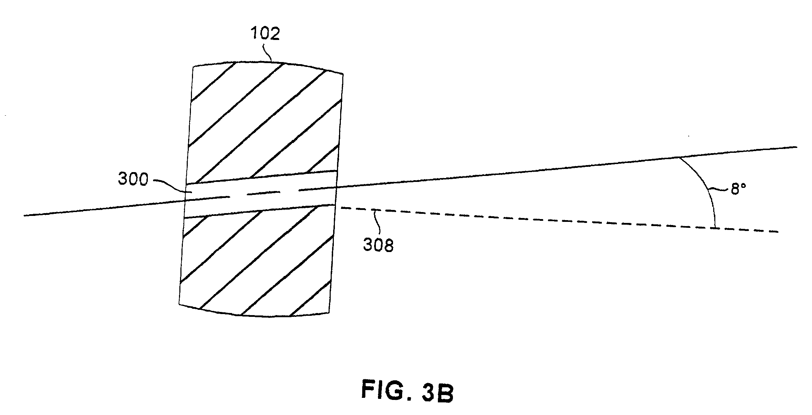

The holes are formed along axes, such as axis 308 and, although the axis 308 of this illustrative embodiment is perpendicular to the front 304 and rear 306 faceplate surfaces, the holes may be formed at an angle to the perpendicular: at an 8° angle for example, as in Figure 3B. A significant portion of light directly projected onto a fiber endface may be reflected back to the light source. In an optical cross-connect, for example, a significant percentage of the light reflected from a microelectromechanical mirror onto a fiber endface may be reflected back to the mirror, thereby reducing the signal power coupled from an input fiber to an output fiber and diminishing the effectiveness of the optical cross-connect. By presenting an off-axis fiber endface less light is reflected at the fiber endface and a greater percentage of light is coupled into the fiber. An array of optical fibers precisely positioned and presenting the same, elliptical cross section may be advantageously employed in an optical cross connect, for example. The angled holes may be formed, for example by electrochemical etching of crystalline substrate material in which the crystal lattice is aligned along such an angle, "off-axis" silicon, for example.

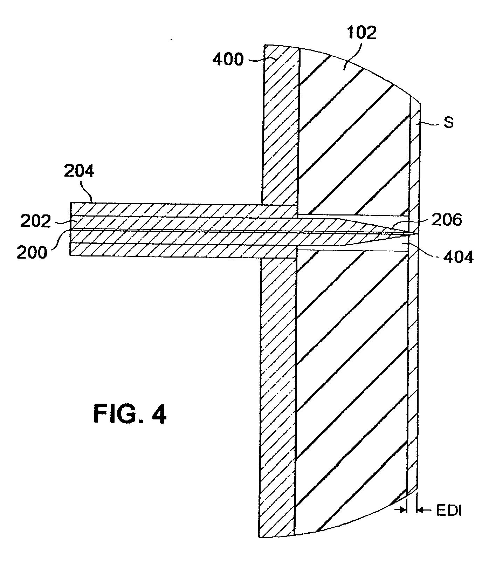

The sectional view of Figure 4 provides a cross-sectional view of a fiber inserted into a hole 104, as previously described. The fiber core 200, fiber cladding 202, fiber coating 204, fiber taper 206 and faceplate 102 are also as previously described. In this illustrative embodiment, the inserted fiber is attached in its through-hole position by a layer of adhesive, such as UV or heat-cured epoxy, 400 applied to the back surface of the faceplate 102, a layer of adhesive 402 applied to the front surface of the faceplate 102, and an adhesive fill 404 substantially enclosing the fiber. The fiber extends through the hole a sufficient distance to ensure that the fiber core 200 is exposed to the front side of the faceplate.

As will be described in greater detail below, a low viscosity adhesive may be injected into the hole filling the space within the faceplate hole and forming a film on the faceplate front surface. An epoxy such as Epo-tec 301 available from Epoxy technologies, Inc may be used for this application. A fiber is inserted into the hole after the epoxy is "preshot" into the hole. The epoxy provides for a "soft hold" on the fiber as it is being inserted and, because the epoxy surrounds the fiber cladding in a hole only slightly larger than the outside diameter of the optical fiber cladding layer, assists in guiding the fiber through the hole and to the exterior of the front surface of the faceplate. An additional layer of Epo-tec 302-3 may be overlaid on the film epoxy layer to provide a better polishing surface. After the fiber is inserted, another layer of epoxy is applied to the rear surface of the faceplate. The epoxy is then cured, the projecting fiber tips trimmed, by mechanical or laser cutting means, the fiber endfaces and faceplate front surface are polished, and an anti-reflective coating may be applied. The adhesive applied to the front surface of the faceplate may be polished to ensure that a full cross section of the fiber core is exposed on the front side of the faceplate. As previously mentioned, the fiber end portion may be cylindrical or formed into a taper in order to ease insertion through the hole. The hole may also be cylindrical or tapered, but the narrowest diameter of the hole is larger than the largest diameter of the fiber cladding layer, allowing the fiber to be inserted completely through the faceplate, and the hole may be formed at an angle through the faceplate to reduce back reflection. The fibers are trimmed and polished to form an array in which all the fiber endfaces are substantially coplanar. In general, standard cutting, grinding and polishing processes may be used.

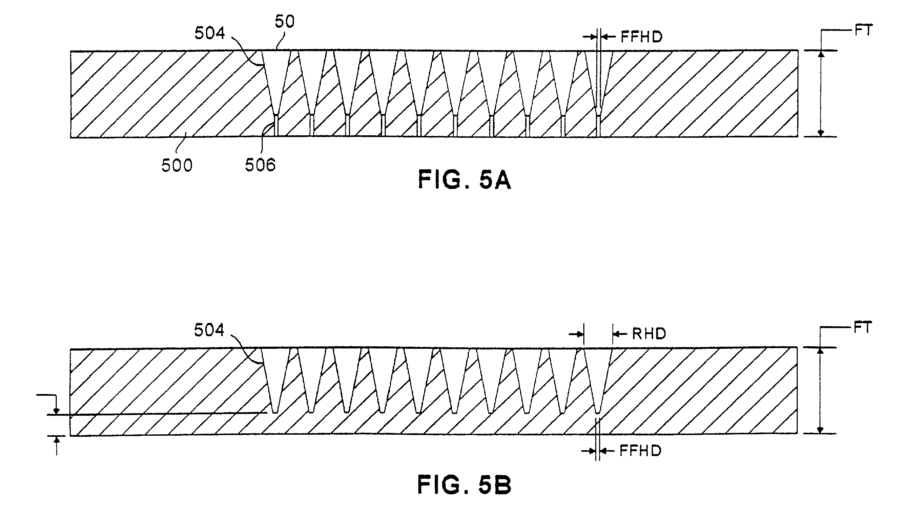

The sectional view of Figure 5A illustrates a faceplate in accordance with the principles of the present invention in which fiber through-holes 502 including wide 504 and narrow 506 sections are formed in a faceplate 500. In an illustrative embodiment, the wide sections 504 are first formed (as illustrated in Figure 5B), using an electrochemical etching, or deep reactive ion etching process, for example, to remove the bulk of the hole material from the faceplate 500. After removing the bulk of the material in this way, a more precise hole-forming process, such as laser cutting, may be employed to form the narrow section 506 which exits the front face of the faceplate. The hole diameter RHD at the rear face of the faceplate, that is, the face through which the fiber is to be inserted into the hole, is substantially larger than the diameter FFHD at the front of the faceplate. As previously described, the narrowest region of the hole 502, within the narrow section 506 in this illustrative embodiment, at 126 micrometers, is wider than the widest cladding diameter of a fiber which is to be inserted in the hole. The diameter RHD of the hole at the rear of the faceplate, at 500 micrometers, may be large enough to accommodate a fiber's coating, or buffer, layer. The wide section 504 of the hole may be substantially conical, as illustrated, to ease the insertion of fibers into the hole. Although the narrow section 506 is illustrated as substantially cylindrical, it may also take on a conical form, as described in the discussion related to Figure 3

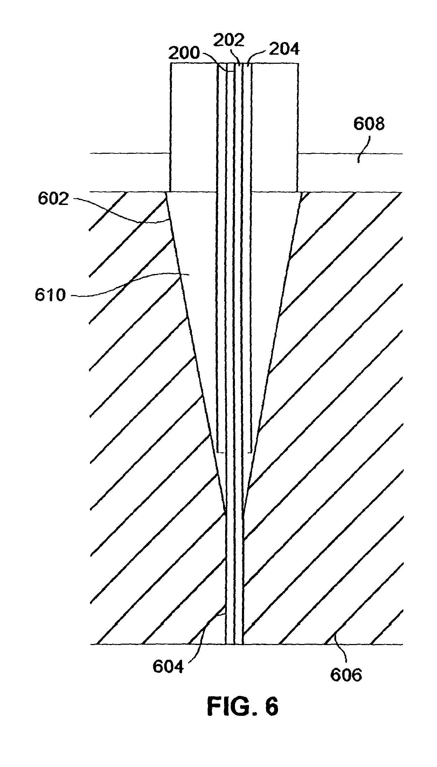

The sectional view of Figure 6 illustrates a two-section hole, as described in the discussion related to Figure 5, within an optical fiber array including a plurality of two-section holes. An optical fiber, including core 200, cladding 202, and buffer 204 layers is fixed in position within a hole 600 (including wide 602 and narrow 604 sections) in a faceplate 606. In this illustrative embodiment the fiber 600 is held in place by an adhesive, such as an epoxy, 610 which surrounds the fiber within the wide section 602 and substantially fills the gap between cladding layer 202 and the wall of the narrow section 604. In addition to fixing the fiber in position, the adhesive provides strain and bend relief for the fiber. A layer of adhesive on the front surface of the faceplate and a layer of adhesive 608 on the back surface of the faceplate may provide additional support for the inserted fiber. In order to provide substantial strain and bend relief for inserted fibers, the layer of adhesive 608 on the back surface of the faceplate may be substantially thicker than, for example, twice the thickness of, the faceplate. In this illustrative embodiment, the fiber includes a jacket 612 which surrounds and shields the cladding layer 204 from physical damage. The jacket 612 is typically composed of a synthetic material such as nylon and is approximately 900 micrometers in diameter. In addition to shielding the cladding layer of the optical fiber, the jacket may operate as a stop by abutting against the faceplate rear surface, thereby terminating the advance of the fiber into the faceplate hole. The jacket may also be encased by the rear adhesive layer 608 to provide strain and bending relief for the fiber.

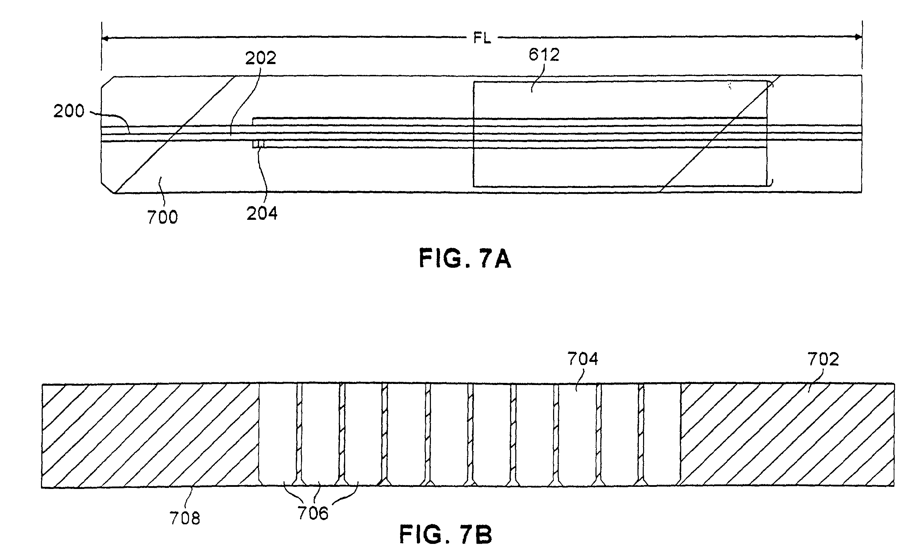

The sectional view of Figure 7A illustrates a ferrule-housed optical fiber for insertion into a faceplate, such as the faceplate of Figure 7B, to form a fiber array in accordance with the principles of the present invention. The ferrule 700 extends for a length FL which extends from the distal end of the enclosed optical fiber to beyond the section of fiber from which the coating layer is stripped. The fiber core 200, cladding 202, buffer 204, and jacket 612 are as previously described. The distal end of the substantially cylindrical ferrule may include a mating segment, such as a partial conical section 701, for abutment with stops 706 formed at the front surface 708 of the faceplate 702. In the illustrative embodiment of Figure 7B, holes 704 may be formed in the faceplate 702 using conventional molding or machining techniques. The inside diameter of the holes 704 is greater than the outside diameter of all the fiber layers, but may include stops 706 formed to mate with the mating segment 701 of the ferrule housing a fiber.

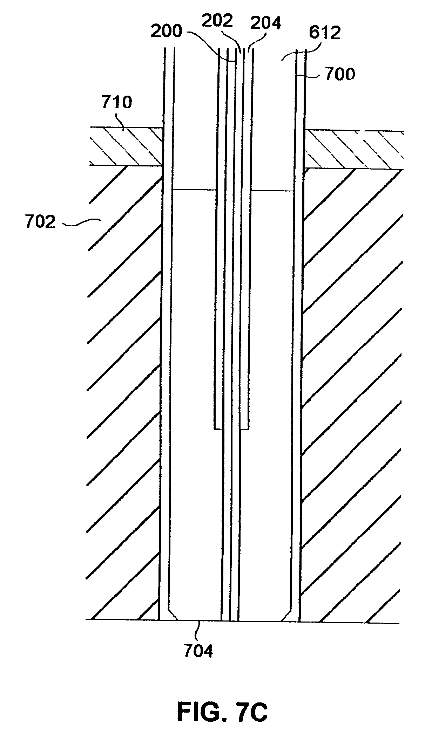

Figure 7C provides a sectional view of a ferrule-housed optical fiber (including fiber core 200, cladding 202, buffer 204, jacket 612, and ferrule 700) inserted in a faceplate 702 hole 704 to form a portion of an optical fiber array in accordance with the principles of the present invention. An adhesive layer 710 is formed on the back surface (the insertion side) of the faceplate 702 and holds the ferrule in position. The adhesive may be a UV or heat-cured epoxy, for example and a layer (not shown) of the adhesive may surround the ferrule inside the hole as well. In this illustrative embodiment, the faceplate thickness is substantially equal to the length of a ferrule, typically in the range of 13 to 25 millimeters and the overall hole diameter is slightly larger than the outside diameter of the ferrule, typically in the range of .75 to 1 millimeters. In the course of producing this embodiment of fiber array, adhesive is preshot into the holes and the ferrule-housed fibers are inserted into the holes. The adhesive, illustratively an uncured epoxy, serves to "float" the ferrules into position. An optical micropositioning system, including a light source for launching a signal into an individual fiber, a light receiver for measuring the amount of light coupled into the fiber, and a three dimensional positioning device, such as employed in the integrated circuit manufacturing industry, combined in a servo loop, may be used to precisely position the ferrules. After employing the epoxy and micropositioning system to float the ferrules into position the epoxy is cured to fix the fibers in their final position.

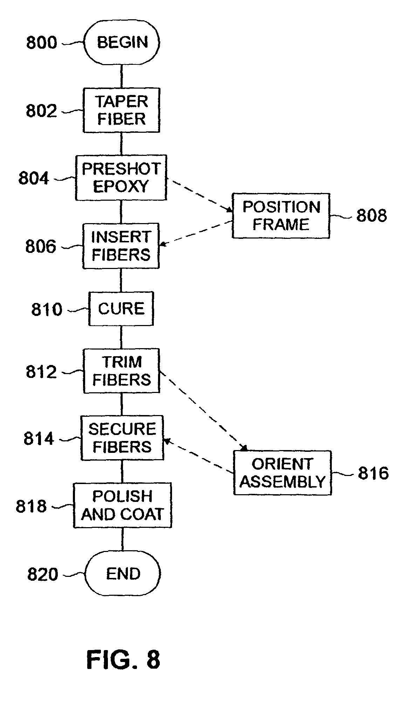

The process by which an optical fiber array in accordance with the principles of the present invention is outlined in the flow chart of Figure 8. The process begins in step 800 and proceeds from there to step 802 where optical fibers that are going to be used in the array may, optionally, be tapered using, for example, the method set forth in the previously mentioned and incorporated U.S. Patent No. 4,469,554 for "Etch Procedure For Optical Fibers," issued September 4, 1984 to Turner. In this illustrative procedure, the taper is formed using a hydrofluoric acid to create relatively long tapers, that is, tapers having a length of ten times the fiber cladding diameter. From step 802 the process proceeds to step 804 where an adhesive, such as a relatively low viscosity epoxy, for example, an epoxy having approximately the viscosity of water such as EpoTec 302-3 available from Epoxy Technology, is injected into the faceplate holes. The adhesive provides a "loose hold" for the fibers during the manufacturing process.

From step 804 the process may proceed directly to step 806 or, if a frame is being employed to guide the fibers into the faceplate holes, the process proceeds to step 808 where the frame is positioned and secured behind the faceplate after which the process proceeds to step 806. The frame and faceplate may be held in a vertical orientation in order to ease the attachment of the frame to the faceplate. In step 806 the distal fiber ends, for example, the tapered ends in cases where the fibers are tapered in step 802, are inserted, one to a hole, in the optical fiber array faceplate holes. The optical fibers are inserted into the rear faceplate through the holes with a sufficient segment of the stripped fiber end-portion extending beyond the front faceplate surface to ensure that, when processing is complete, a complete cross-section of each fiber core layer is exposed at the front side of the faceplate. The preshot epoxy applied in step 804, which may include an epoxy layer on the front surface of the faceplate and epoxy surrounding the fiber within the hole, is cured in step 810.

From step 810 the process proceeds to step 812 where the portion of fiber extending beyond the faceplate front surface (and epoxy layer, if present on the faceplate) is sheared, leaving the fiber endfaces substantially coplanar with the front surface of the faceplate. The shearing may be accomplished, for example, using a laser-cutting process. After the fibers are trimmed in step 812 the process proceeds to step 814, or, if a frame has been attached to the faceplate in a vertical orientation in step 808, the process first proceeds to step 816 where the faceplate assembly (including faceplate and frame) is moved to a horizontal orientation. In step 814, whether arrived at from step 816 or step 812, epoxy is applied to the back of the faceplate and cured in order to securely hold the fibers in position within the optical fiber array. From step 814 the process proceeds to step 818 where the fiber endfaces are polished and coated with an antireflective coating. From step 818, the process proceeds to end in step 820.

The foregoing description of specific embodiments of the invention has been presented for the purposes of illustration and description. It is not intended to be exhaustive or to limit the invention to the precise forms disclosed, and many modifications and variations are possible in light of the above teachings. The embodiments were chosen and described to best explain the principles of the invention and its practical application, and to thereby enable others skilled in the art to best utilize the invention. It is intended that the scope of the invention be limited only by the claims appended hereto.

## Claims

1. An optical fiber array (100) comprising: a faceplate (102;500,606,702) having a rear face (304) and a front face (306,708) and a plurality of openings (104;502;600;704) that communicate through said rear (304) and forward faces (306,708) forming channels therebetween, the openings (104;502;600;704;304) at the rear and front (306,708) faces of the faceplate (102;500;606;702) being substantially circular openings having respective rear and front diameters (FRD;FFD; RHD; FFHD); and a plurality of optical fibers (106) each having core (200), cladding (202), and coating (204) layers, the core and cladding layers (200,202) of each fiber (106) extending beyond the coating layer (204) of the fiber (106) at one end to expose the cladding layer (202), the rear and front opening diameters (FRD;FFD;RHD;FFHD) and the diameter (D) of the channel formed therebetween all being greater than the cladding diameter (CD) of fibers (106) inserted therethrough, each of the respective ends of the fibers (106) having an exposed cladding layer (202) extending into a respective rear faceplate opening and a core layer (200) extending to the front face (306;307) of the faceplate (102;500;606;702).

2. The array of claim 1 wherein the entire cross section of each fiber core (200) is exposed through the front face (306;708) of the faceplate (102;500;606;702).

3. The array of claim 1 wherein the distal end of each of the fibers (106) is tapered to form a substantially conical shape.

4. The array of claim 1 wherein each of the respective inserted fiber ends includes an exposed cladding layer (202) extending to the front face (306;708) of the faceplate (102;500;606;702).

5. The array of claim 1 wherein each channel (300) between rear and front faces (304;306) of the faceplate (102) is formed at an angle to a perpendicular between the front and rear faces (304;306) of the faceplate (102), the angle predetermined to substantially reduce back reflection at the exposed optical fiber core (200).

6. The array of claim 5 wherein the angle is substantially equal to eight degrees.

7. The array of claim 1 wherein the channel (502;600) between rear and front faces of the faceplate (500;606) includes a first section (506;604), the diameter of which is less than three micrometers wider than the cladding layer (202) of the optical fiber (106) inserted therein, and a second section (504;602), the diameter of which tapers from the diameter (FFHD) of the first section (506;604) to a diameter (RHD) which is greater than that of the first section (506;604).

8. The array of claim 1 further including an adhesive (400;402;404;608;610;710) fixing the fibers (106) in place within the array (100).

9. The array of claim 8 wherein the adhesive (404;610) is an epoxy which substantially surrounds the inserted optical fiber (106).

10. The array of claim 1 wherein each fiber (106) is housed within a ferrule (700) which is housed within one of the channels formed between rear and front openings in the faceplate.

11. A method for making an optical fiber array (100) comprising the steps of:
(A) forming a faceplate (102;500;606;702) having a rear face (304) and a front face (306;708) and a plurality of spaced openings (104;502;600;704) that communicate through said rear (304) and forward faces (306;708) forming channels therebetween, the openings (104;502;600;704) at the rear and front faces (304;306;708) of the faceplate (102;500;606;702) being substantially circular openings having respective rear and front diameters (FRD;FFD;RHD:FFHD);
(B) stripping the coating layer (204) from an end portion of a plurality of optical fibers (106) having core, cladding, and coating layers (200;202;204), to expose the cladding layer (202); and
(C) inserting the stripped fiber ends in the rear openings of the faceplate (104;502;600;704) to expose a cross section of each fiber (106) to the front surface (306;708) of the faceplate (104;502;600;704), the rear and front opening diameters (FRD;RHD;FFD;FFHD) and the diameter (D) of the channel formed therebetween all being greater than the cladding diameter (CD) of fibers (106) inserted therethrough.

12. The method of claim 11 further comprising the step of:
(D) tapering the distal end of a fiber (106) before inserting it into the rear opening.

13. The method of claim 11 further comprising the step of:
(E) using an adhesive (400;402;404;608;610;710) to fix the fibers (106) in position within the fiber array (100).

14. The method of claim 13 wherein the step (E) of fixing the fibers (106) in position within the array (100) further comprises the step of:
(E1) injecting epoxy (404;610) into one of the openings of each channel having an optical fiber (106) inserted into it.

15. The method of claim 14 wherein the step (E1) of fixing the fibers (106) within the array (100) further comprises the step of:
(E1 a) applying a layer (402) of epoxy to the front surface of the faceplate (102).

16. The method of claim 14 wherein the step (E1) of fixing the fibers (106) within the array (100) further comprises the step of:
(E2) applying a layer (400;608;710) of epoxy to the rear surface of the faceplate (102;606;702) and curing the epoxy.

17. The method of claim 11 wherein step (A) further comprises the step of:
(A1) employing one processing technique to form a plurality of first channel sections in the faceplate, the first channel sections having openings at the rear face of the faceplate, then employing a second, more precise, processing technique to form second channel sections, each having an opening at the front face of the faceplate and an opening to a corresponding first channel section.

18. The method of claim 11 wherein step (A) further comprises the step of:
(A2) forming channels (300) the central axes of which are at an angle to a perpendicular between the front and rear faces (304;306) of the faceplate (102).

19. The method of claim 11 wherein step (A) further comprises the step of:
(A3) forming tapered channels (504,602) the rear openings of which are of a larger diameter than that of the front openings.

20. The method of claim 11 wherein step (C) further comprises the step of:
(C1) tapering the stripped fiber ends (206) before inserting them into the faceplate openings.
